Europäisches Patentamt

European Patent Office

Office européen des brevets

(19)

(11) Veröffentlichungsnummer : **0 123 799**
**B1**

(12) **EUROPÄISCHE PATENTSCHRIFT**

(51) Int. Cl.⁴ : **B 60 T   7/00**, B 60 T 11/00

(45) Veröffentlichungstag der Patentschrift :
28.05.86

(21) Anmeldenummer : 84101507.6

(22) Anmeldetag : 14.02.84

(54) **Bremseinrichtung.**

(30) Priorität : 03.03.83 DE 3307522

(43) Veröffentlichungstag der Anmeldung :
07.11.84 Patentblatt 84/45

(45) Bekanntmachung des Hinweises auf die Patenterteilung : 28.05.86 Patentblatt 86/22

(84) Benannte Vertragsstaaten :
DE FR GB IT

(56) Entgegenhaltungen :
DE-C-   529 104
DE-C-   679 682
DE-C-   722 183
US-A- 3 838 756

(73) Patentinhaber : **ROBERT BOSCH GMBH**
**Postfach 50**
**D-7000 Stuttgart 1 (DE)**

(72) Erfinder : **Kötter, Wolfgang, Dipl.-Ing.**
**Hohe Anwande 26**
**D-7145 Markgröningen (DE)**

EP 0 123 799 B1

## Beschreibung

Die Erfindung geht aus von einer hydraulischen Bremseinrichtung nach der Gattung des Hauptanspruchs. Eine derartige aus der DE-A-529104 bekannte Bremseinrichtung hat den Nachteil, daß nur bis zu geringen Steigungen der Schlepperzug von der Feststellbremsanlage des Zugfahrzeugs im Stillstand gehalten werden kann. Zum An- und Abkuppeln der Anhänger vom Zugfahrzeug war bisher eine zusätzliche Hilfsperson notwendig. Aufgabe der Erfindung ist es, daß auf eine Hilfsperson beim An- und Abkuppeln verzichtet werden kann.

Die erfindungsgemäße Einrichtung mit den kennzeichnenden Merkmalen des Hauptanspruchs hat demgegenüber den Vorteil, daß sie durch die wahlweise Betätigung der mechanischen Rasteinrichtung vom Heck und von der Kabine des Schleppers aus den Bedienungskomfort und die Sicherheit für das Bedienungspersonal verbessert. Ohne Gefahr kann eine Person alleine an Steigungen die Anhänger an- oder abkuppeln oder die Feststellbremse der Anhänger bedienen. Eine zusätzliche Person ist dazu nicht mehr notwendig. Durch die Warneinrichtung wird die Person bei abgestelltem Motor an die mechanisch betätigte, hydraulische Bremseinrichtung erinnert.

Durch die in den Unteransprüchen aufgeführten Maßnahmen sind Weiterbildungen der im Hauptanspruch angegebenen Merkmale möglich.

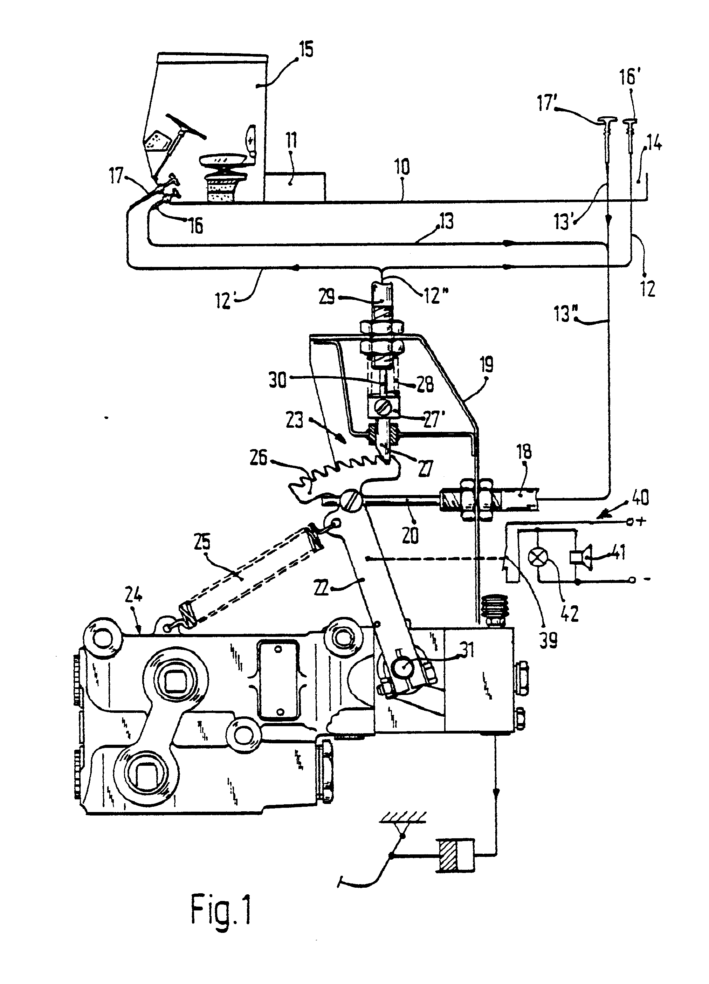

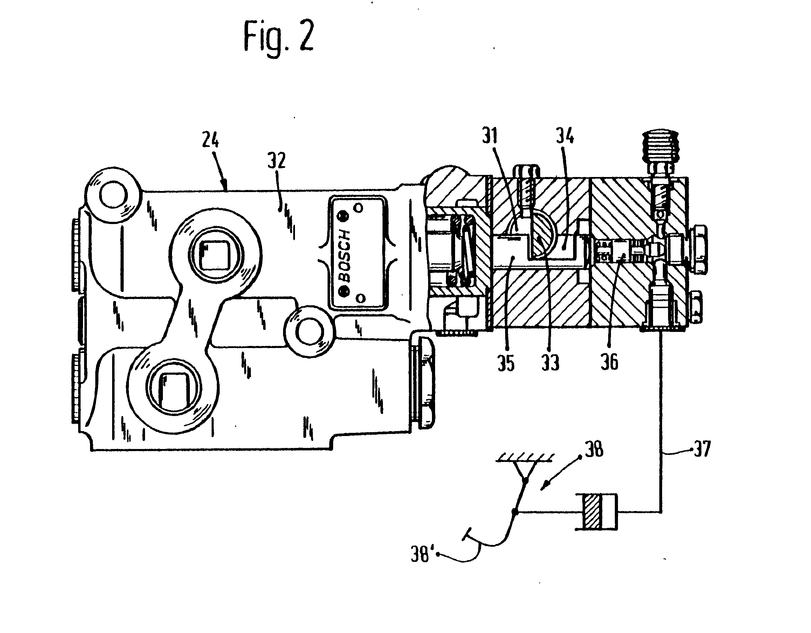

Ein Ausführungsbeispiel der Erfindung ist in der Zeichnung dargestellt und in der nachfolgenden Beschreibung näher erläutert. Es zeigen Figur 1 eine hydraulische Bremseinrichtung mit mechanischer Rastvorrichtung in schematischer Darstellung und Figur 2 das hydraulische Betätigungselement.

In der Figur 1 ist schematisch ein Zugfahrzeug 10 dargestellt, auf dem außer der nicht dargestellten Betriebsbremse für das Zugfahrzeug auch eine Bremseinrichtung 11 für an das Zugfahrzeug angehängte Anhänger angeordnet ist. Letzere ist hydraulisch und zusätzlich mechanisch über zwei getrennt verlaufende Kabelzüge 12, 13 bedienbar. Dazu sind am Heck 14 und in der Kabine 15 des Zugfahrzeugs 10 je zwei Handgriffe 16, 17 bzw. 16', 17' angeordnet. Die Kabelzüge 13, 13' zum Bremsen sind miteinander verbunden und führen — bezeichnet als Kabelzug 13" — zu einer Führung 18. Diese ist an einer gestellfesten Einrichtung 19 befestigt. Der Kabelzug 13" wirkt über eine Stange 20 an einem mit einer Rastvorrichtung 23 versehenen Hebel 22 an. Als Gegenkraft zum Kabelzug 13" ist zwischen Hebel 22 und einem als Teil der Bremseinrichtung dienenden Bremsventil 24 eine Zugfeder 25 angeordnet. Am freien Ende des Hebels 22 ist ein nur in einer Richtung sperrendes Zahnrichtgesperre 26 ausgebildet. In dieses greift ein auf einer Seite schräg abgeflachter Sperrer 27 ein. Dieser ist Teil eines von einer Feder 28 belasteten Widerlagers 27', das an einer gestellfest angeordneten Führung 29 geführt ist. In die Führung 29 mündet der Kabelzug 12", der mit einer Stange 30 verbunden ist, die in der Führung 29 geführt und am Widerlager 27' befestigt ist. Über den Kabelzug 12" kann die mechanische Rastvorrichtung 23 gelöst werden.

Der Hebel 22 der als Rastvorrichtung 23 ausgebildeten Feststellvorrichtung ist an einem in einem Gehäuse 32 eines Bremsventils 24 schwenkbar gelagerten Bolzen 31 befestigt. Der Bolzen 31 weist einen segmentförmigen Abschnitt 33 auf und greift mit diesem in eine Ausnehmung 34 in einem Betätigungskolben 35 ein. Auf dem Betätigungskolben 35 wirkt ein Kolben 36 ein, von dem eine Leitung 37 zu einem hydraulischen Druckgeber 38 mit Bremspedal 38', der in der Kabine 19 angeordnet ist. Der Druckgeber 38 mit Bremspedal 38' bildet die erste Betätigungseinrichtung des Anhängerbremsventils, während die Bauteile 13, 16, 17', 20, 22 und 33 eine Zweite, unabhängig von der ersten wirkende mechanische Betätigungseinrichtung bilden. Am Hebel 22 ist ein Ein-/Ausschalter 39 eines elektrischen Schaltkreises 40 angeordnet. Dieser weist eine akustische 41 und optische 42 Einrichtung auf, die bei Schließen des Schalters 39 betätigt wird.

Die Wirkungsweise der Bremseinrichtung ist wie folgt :

Werden die Betriebsbremse und parallel dazu die Bremseinrichtung 11 für die Anhänger mittels der Ansteuerung 38 hydraulisch betätigt, so wird der Betätigungskolben 35 — bezogen auf Figur 1 — durch den druckbeaufschlagten Kolben 36 nach links verschoben. Hierdurch wird das Bremsventil 24 aktiviert, wodurch die Anhänger gebremst werden. Die Bremskraft wird nur solange aufrecht erhalten, wie die Ansteuerung 38 betätigt ist.

Hat der Fahrer nun den Schlepperzug gestoppt, und will er anschließend den oder die Anhänger, insbesondere an einer Steigung, abkoppeln, so betätigt er nach dem Stillstand entweder von der Kabine 15 oder auch vom Heck 14 aus den Handgriff 17 bzw. 17'. Zieht er den Handgriff 17 von der Kabine 15 aus, so kann der Fahrer bei betätigter hydraulischer Ansteuerung 38 den Betätigungskolben 35 des Bremsventils 24 in seiner Position feststellen. Durch Ziehen der Handgriffe 17 bzw. 17' wird über den Kabelzug 13" der Hebel 22 — bezogen auf die Figur 1 — durch die mit dem Kabelzug 13" verbundene Stange 20 im Uhrzeigersinn verschwenkt. Der Sperrer 27 rastet im Zahnrichtgesperre 26 ein. Gleichzeitig wird der fest am Hebel 22 befestigte Bolzen 31 gedreht. Der Betätigungskolben 35 wird nun mechanisch durch den segmentartigen Abschnitt 33 in seiner Lage blockiert. Ist der Betätigungskolben 35 noch nicht hydraulisch verschoben, so wird er durch den segmentartigen Abschnitt 33 nach links bewegt und wird festgehalten. Der Fahrer kann nun ohne Gefahr die Feststellbremsanlage der Anhänger betätigen, anschließend über den Handgriff 16' vom Heck 14 aus die hydraulische Bremseinrichtung 11 wieder lösen und die Anhänger abkuppeln.

Außer Betrieb gesetzt wird das Bremsventil 24 dadurch, daß vom Heck 14 oder von der Kabine 15 aus durch Ziehen der Handgriffe 16, 16' über den Kabelzug 12" der Sperrer 27 der Rastvorrichtung 23 aus dem Zahnrichtgesperre 26 gezogen und der Hebel 22 von der Feder 28 in die Ausgangsstellung zurückbewegt wird. Über den Hebel 22 wird auch der Abschnitt 33 gedreht und somit der Betätigungskolben 35 wieder in seine Ausgangsstellung gebracht. Das Lösen der mechanischen Bremseinrichtung ist notwendig, da bei hydraulischen Bremseinrichtungen Druckverluste durch Leckagen auftreten, die die Bremswirkung herabsetzen. Auf diese Gefahr weist die Warneinrichtung hin. Bei im Uhrzeigersinn verschwenktem Hebel 22, d. h. in Bremsstellung, wird der Schalter 39 des Schaltkreises 40 geschlossen, so daß Stromfluß möglich ist, und die optische 42 und/oder akustische 41 Warneinrichtung betätigt wird. Solange die Rastvorrichtung 23 eingerastet ist, wird somit der Fahrer vor der Gefahr eines eventuellen Druckverlustes gewarnt und darauf hingewiesen, die Rastvorrichtung 23 nicht als sogenannte zusätzliche Handbremse zu benützen.

Beim Ankuppeln der Anhänger ist der Funktionsablauf derselbe. Bei betätigter Feststellbremsanlage der Anhänger und des Zugfahrzeugs werden die Anhänger am Zugfahrzeug angekuppelt. Sofort kann jetzt vom Heck 14 aus über den Handgriff 17' die hydraulische Bremseinrichtung 11 der Anhänger mechanisch betätigt und festgestellt werden. Gefahrlos kann nun die Feststellbremsanlage der Anhänger gelöst werden. Der Fahrer hat die Möglichkeit, vom Heck 14 oder von der Kabine 15 aus die Bremseinrichtung 11 wieder zu lösen und abzufahren.

## Patentansprüche

1. Hydraulische Bremseinrichtung (11) für an ein Zugfahrzeug (10) angehängte Anhänger, die mit einem auf dem Zugfahrzeug (10) angeordneten Anhängerbremsventil (24), ausgerüstet sind das von einer von einem Bremspedal (38') betätigbaren ersten Betätigungseinrichtung (37, 38) ansteuerbar ist, die mindestens mittelbar eine Kraft auf einen im Anhängerbremsventil angeordneten Betätigungskolben (35) ausübt, auf den auch eine mechanische zweite Betätigungseinrichtung (13, 16, 17', 20, 33) einwirkt, die von der Kabine (15) des Zugfahrzeugs (10) aus bedienbar und mit einer Feststellvorrichtung (12, 16, 23) versehen ist, dadurch gekennzeichnet, daß die erste Betätigungseinrichtung als hydraulischer Druckgeber (38) ausgebildet ist und die zweite Betätigungseinrichtung auch vom Heck des Zugfahrzeugs aus betätigbar ist.

2. Einrichtung nach Anspruch 1, dadurch gekennzeichnet, daß die zweite mechanische Betätigungseinrichtung einen ersten Kabelzug (13) zum Betätigen der Anhängerbremse und einen zweiten Kabelzug (12) zum Lösen derselben aufweist, daß die Kabelzüge (12, 13) auf einen Hebel (22) einwirken, der mit der als Rastvorrichtung (23) ausgebildeten Feststellvorrichtung versehen ist, und daß der Hebel (22) auf den Betätigungskolben (35) einwirkt.

3. Einrichtung nach Anspruch 1 und/oder 2, dadurch gekennzeichnet, daß der Hebel (22) mit einem Bolzen (31) verbunden ist, der zum Verschieben des Betätigungskolbens (35) dient und dort mit einem Segment (33) in eine Ausnehmung (34) des Betätigungskolbens greift.

4. Einrichtung nach einem der Ansprüche 1 bis 3, dadurch gekennzeichnet, daß diese eine optische (42) oder akustische (41) Warneinrichtung aufweist, die bei abgestelltem Motor anzeigt, ob die mechanische Betätigungseinrichtung betätigt ist oder nicht.

## Claims

1. Hydraulic brake device (11) for trailers which are attached to a tractor vehicle (10) and are equipped with a trailer brake valve (24) which is arranged on the tractor vehicle (10) and can be controlled by a first actuating device (37, 38) which can be actuated by a brake pedal (38') and at least indirectly exerts a force on an actuating piston (35) which is arranged in the trailer brake valve and on which a mechanical, second actuating device (13, 16, 17', 20, 33) also acts, which can be operated from the cab (15) of the tractor vehicle (10) and is provided with a locking device (12, 16, 23), characterised in that the first actuating device is designed as an hydraulic pressure transducer (38) and the second actuating device can also be actuated from the rear of the tractor vehicle.

2. Device according to Claim 1, characterised in that the second actuating device has a first draw cable (13) for actuating the trailer brake and a second draw cable (12) for releasing the same, that the draw cables (12, 13) act on a lever (22) which is provided with a locking device designed as a latching device, and that the lever (22) acts on the actuating piston (35).

3. Device according to Claims 1 and/or 2, characterised in that the lever (22) is connected to a pin (31) which is used for displacing the actuating piston (35) and, with a segment (33), engages there into a recess (34) of the actuating piston.

4. Device according to one of Claims 1 to 3, characterised in that this has an optical (42) or acoustic (41) warning device which, when the engine is stopped, indicates whether the mechanical actuating device is actuated.

## Revendications

1. Dispositif hydraulique de freinage (11) pour une remorque attelée à un véhicule de traction (10), ce véhicule et cette remorque étant équipés d'une soupape de freinage de la remorque (24) disposée sur le véhicule de traction (10), et qui est susceptible d'être commandée par un premier

dispositif de manœuvre (37, 38) susceptible d'être actionné par une pédale de frein (38'), ce dispositif exerçant au moins indirectement un effort sur un piston de manœuvre (35) disposé dans la soupape de freinage de la remorque, piston sur lequel agit également un second dispositif mécanique de manœuvre (13, 16, 17', 20, 33) susceptible d'être manœuvré à partir de la cabine (15) du véhicule de traction (10) et qui est muni d'un dispositif de fixation (12, 16, 23), dispositif hydraulique de freinage caractérisé en ce que le premier dispositif de manœuvre est constitué par un générateur hydraulique de pression (38), tandis que le second dispositif de manœuvre peut également être actionné de l'arrière du véhicule de traction.

2. Dispositif hydraulique de freinage selon la revendication 1, caractérisé en ce que le second dispositif mécanique de manœuvre comporte une première traction par câble (13) pour actionner le frein de remorque et une seconde traction par câble (12) pour desserrer ce frein, ces tractions par câbles (12, 13) agissant sur un levier (22) qui est muni du dispositif de fixation réalisé sous la forme d'un dispositif d'encliquetage (23), tandis que le levier (22) agit sur le piston de manœuvre (35).

3. Dispositif hydraulique de freinage selon la revendication 1 et/ou la revendication 2, caractérisé en ce que le levier (22) est relié à un axe (31) qui sert à déplacer le piston de manœuvre (35) et qui vient en prise dans ce piston par un segment (33) dans un évidement (34) du piston de manœuvre.

4. Dispositif hydraulique de freinage selon une des revendications 1 à 3, caractérisé en ce que ce dispositif comporte un dispositif optique (42) ou acoustique (41) d'avertissement qui, lorsque le moteur est arrêté, indique si le dispositif mécanique de manœuvre est actionné ou non.

Fig.1

Fig. 2

0 123 799